# EUROPEAN PATENT APPLICATION

(11) **EP 3 670 604 A1**
(43) Date of publication of application: **24.06.2020**
(21) Application number: 19213756.0
(22) Date of filing: 05.12.2019
(51) Int. Cl.: C08L 69/00

(54) **FIRE RETARDANT GLASS FILLED POLYCARBONATE COMPOSITIONS**

(30) Priority: 21.12.2018 EP 18215111
(71) Applicant: SABIC Global Technologies B.V., 4612 PX Bergen op Zoom (NL)
(72) Inventor: MICCICHE, Fabrizio, 4612 PX Bergen op Zoom (NL); van der MEE, Mark Adrianus Johannes, 4612 PX Bergen op Zoom (NL); van de GRAMPEL, Robert Dirk, 4612 PX Bergen op Zoom (NL); GOOSSENS, Johannes Martinus Dina, 4612 PX Bergen op Zoom (NL); GUNBAS, Duygu Deniz, 4612 PX Bergen op Zoom (NL)
(74) Representative: Modiano, Micaela Nadia

(57) **Abstract**

A flame retardant thermoplastic composition, comprising: 40-94 wt%, or 60-92 wt%, or 75-90 wt% of a polycarbonate, a polycarbonate copolymer, or a combination thereof; 5-19.7 wt%, or 5-15 wt%, or 8-12 wt% of a fiber reinforcement; 0.2-0.9 wt%, or 0.2-0.5 wt%, or 0.25-0.4 wt% of potassium perfluorobutane sulfonate; optionally 1-20 ppm, or 1-10 ppm, or 3-5 ppm by weight of a phosphorous-containing acid stabilizer; optionally a colorant; and 0.05-0.4 wt%, or 0.1-0.3 wt%, or 0.1-0.2 wt% of an anti-drip agent, wherein the fluorine content is 0.1-0.5 wt%, or 0.1-0.4 wt%, or 0.1-0.3 wt%, wherein all weight percent values are based on the total weight of the composition, and wherein the total weight percent is 100 wt%, and preferably a molded article of the composition has a UL94 flammability rating of V0 at a thickness of 1.5 mm, or 1.2 mm, or 1.0 mm, or 0.8 mm.

## Description

### BACKGROUND

This disclosure relates to glass filled polycarbonate compositions with flame-retardant properties, as well as articles of manufacture that include the compositions.

Polycarbonate resins have been used extensively in the fabrication of electrical and electronic equipment due to excellent electrical properties, transparency, and mechanical strength, especially impact strength. Electrical and electronic equipment are subject to stringent safety requirements, particularly in the area of fire/flame retardancy. These safety requirements are difficult to achieve in thin wall articles, e.g., those with a wall thickness of about 1.5 mm or less. It is becoming increasingly desirable for safety requirements to be met without using chlorinated or brominated fire retardants.

Accordingly, there remains a need in the art for flame retardant polycarbonate compositions that have good thin wall flame retardance without the use of chlorinated or brominated flame retardants.

### BRIEF DESCRIPTION

According to an aspect, a flame retardant thermoplastic composition comprises 40 to 94 weight percent (wt%), preferably 60 to 92 wt%, more preferably 75 to 90 wt% of a polycarbonate, polycarbonate, a polycarbonate copolymer, or a combination thereof; 5 to 19.7 wt%, preferably 5 to 15 wt%, more preferably 8 to 12 wt% of a fiber reinforcement; 0.2 to 0.9 wt%, preferably 0.2 to 0.5 wt%, more preferably 0.25 to 0.4 wt% of potassium perfluorobutane sulfonate; optionally 1 to 20 parts per million (ppm) by weight, preferably 1 to 10 ppm, more preferably 3 to 5 ppm of a phosphorous-containing acid stabilizer; optionally a colorant; and 0.05 to 0.4 wt%, preferably 0.1 to 0.3 wt%, more preferably 0.1 to 0.2 wt% of an anti-drip agent, wherein the fluorine content of the composition is 0.1 to 0.5 wt%, preferably 0.1 to 0.4 wt%, more preferably 0.1 to 0.3 wt%, wherein all weight percent values are based on the total weight of the composition, and wherein the total weight percent is 100 wt%, and preferably wherein a molded article of the thermoplastic composition has a UL94 flammability rating of V0 at a thickness of 1.5 millimeters (mm), preferably at a thickness of 1.2 mm, more preferably at a thickness of 1.0 mm or 0.8 mm.

According to another aspect, an article comprising the thermoplastic composition is provided.

Also provided is the use of the thermoplastic composition as a film, a sheet, a layer of a multilayer film, or a layer of a multilayer sheet.

The above described and other features are exemplified by the following detailed description.

### DETAILED DESCRIPTION

The Applicants have discovered that increased amounts of flame retardant salt, such as Rimar salt, can be used to provide polycarbonate compositions having improved flame retardancy. Surprisingly, the increased amounts of flame retardant salt does not result in the degradation of polycarbonate properties, even under abusive molding conditions or after extended exposure to high temperature and high relative humidity. In addition, the polycarbonate compositions including the increased amounts of flame retardant salt can accommodate colorants such as pigments and dyes without loss of flame retardance.

The flame retardancy of the polycarbonate compositions including the increased amounts of flame retardant salt can be exemplified as a UL94 flammability rating of V0, as measured using thin walled articles derived from the compositions. For example, the V0 rating can be achieved at thicknesses of 1.5 mm, 1.2 mm, 1.0 mm, or 0.8 mm. Moreover, the Applicants have also discovered a non-linear relationship between the amount of flame retardant salt and the UL94 flammability rating.

Provided herein is a thermoplastic composition including 40 to 94 wt%, preferably 60 to 92 wt%, more preferably 75 to 90 wt% of a polycarbonate, a polycarbonate copolymer, or a combination thereof; 5 to 19.7 wt%, preferably 5 to 15 wt%, more preferably 8 to 12 wt% of a fiber reinforcement; 0.2 to 0.9 wt%, preferably 0.2 to 0.5 wt%, more preferably 0.25 to 0.4 wt% of potassium perfluorobutane sulfonate; optionally 1 to 20 ppm, preferably 1 to 10 ppm, more preferably 3 to 5 ppm by weight of a phosphorous-containing acid stabilizer; and 0.05 to 0.4 wt%, preferably 0.1 to 0.3 wt%, more preferably 0.1 to 0.2 wt% of an anti-drip agent, wherein all weight percent values are based on the total weight of the composition. The total weight of the composition totals 100 wt%. The composition has a fluorine content of 0.1 to 0.5 wt%, preferably 0.1 to 0.4 wt%, more preferably 0.1 to 0.3 wt% based on the total weight of the composition. For example, the composition can comprise 60 to 92 wt% of the polycarbonate, 7 to 12 wt% of the fiber reinforcement, 0.2 to 0.5 wt% of potassium perfluorobutane sulfonate, and 0.1 to 0.4 wt% of the anti-drip agent. In other aspects, the composition comprises 45 to 65 wt% of a first polycarbonate, 25 to 35 wt% of a second polycarbonate, 5 to 15 wt% of the fiber reinforcement, 0.2 to 0.5 wt% of potassium perfluorobutane sulfonate, 0.1 to 0.4 wt% of the anti-drip agent, and optionally 1 to 20 ppm by weight of the phosphorous-containing acid stabilizer. For example, the thermoplastic composition can comprise 45 to 65 wt% of a first polycarbonate, 25 to 35 wt% of a second polycarbonate, 8 to 12 wt% of the fiber reinforcement, 0.25 to 0.4 wt% of potassium perfluorobutane sulfonate, 0.1 to 0.3 wt% of the anti-drip agent, and optionally 1 to 10 ppm by weight of the phosphorous-containing acid stabilizer. The composition can be molded to provide sample having a UL94 flammability rating of V0 at a thickness of 1.5 mm, preferably at a thickness of 1.2 mm, and more preferably at a thickness of 1.0 mm or 0.8 mm.

"Polycarbonate" and "polycarbonate copolymer" as used herein means a homopolymer or copolymer having repeating structural carbonate units of formula (1) 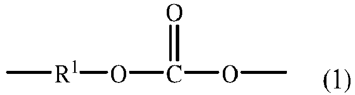 wherein at least 60 percent of the total number of R¹ groups are aromatic, or each R¹ contains at least one C₆₋₃₀ aromatic group. Polycarbonates include homopolycarbonates (wherein each R¹ in the polymer is the same). Polycarbonate copolymers include copolycarbonates having different R¹ moieties in the carbonate units, copolymers comprising carbonate units and other types of polymer units (e.g., ester or siloxane units), or a combination thereof. Specifically, each R¹ can be derived from a dihydroxy compound such as an aromatic dihydroxy compound of formula (2) or a bisphenol of formula (3). 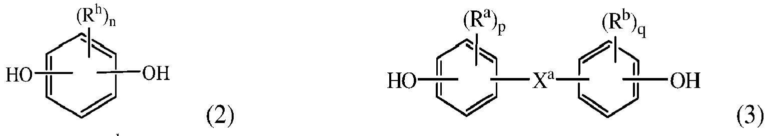 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. For example, p and q each can be 0, or p and q each can be 1, and R^{a} and R^{b} each can be a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d})- wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Some illustrative examples of dihydroxy compounds that can be used are described, for example, in WO 2013/175448 A1, US 2014/0295363, and WO 2014/072923. Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol), or a combination thereof.

The polycarbonate copolymer can include carbonate units and ester units ("poly(ester-carbonate)s", also known as polyester-polycarbonates). Poly(ester-carbonate)s further contain, in addition to recurring carbonate chain units of formula (1), repeating ester units of formula (4) 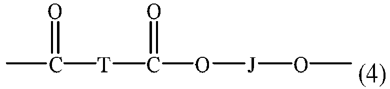 wherein J is a divalent group derived from a dihydroxy compound (which includes a reactive derivative thereof), and can be, for example, a C₁₋₁₀ alkylene, a C₆₋₂₀ cycloalkylene, a C₅₋₂₀ arylene, or a polyoxyalkylene group in which the alkylene groups contain 2 to 6 carbon atoms, specifically, 2, 3, or 4 carbon atoms; and T is a divalent group derived from a dicarboxylic acid (which includes a reactive derivative thereof), and can be, for example, a C₁₋₂₀ alkylene, a C₅₋₂₀ cycloalkylene, or a C₆₋₂₀ arylene. Copolyesters containing a combination of different T or J groups can be used. The polyester units can be branched or linear.

Specific dihydroxy compounds include aromatic dihydroxy compounds of formula (2) (e.g., resorcinol), bisphenols of formula (3) (e.g., bisphenol A), a C₁₋₈ aliphatic diol such as ethane diol, n-propane diol, i-propane diol, 1,4-butane diol, 1,4-cyclohexane diol, 1,4-hydroxymethylcyclohexane, or a combination thereof. Aliphatic dicarboxylic acids that can be used include C₅₋₂₀ aliphatic dicarboxylic acids (which includes the terminal carboxyl groups), specifically linear C₈₋₁₂ aliphatic dicarboxylic acid such as decanedioic acid (sebacic acid); and alpha, omega-C₁₂ dicarboxylic acids such as dodecanedioic acid (DDDA). Aromatic dicarboxylic acids that can be used include terephthalic acid, isophthalic acid, naphthalene dicarboxylic acid, 1,4-cyclohexane dicarboxylic acid, or a combination thereof. A combination of isophthalic acid and terephthalic acid wherein the weight ratio of isophthalic acid to terephthalic acid is 91:9 to 2:98 can be used.

Specific ester units include ethylene terephthalate units, n-proplyene terephthalate units, n-butylene terephthalate units, ester units derived from isophthalic acid, terephthalic acid, and resorcinol (ITR ester units), and ester units derived from sebacic acid and bisphenol A. The molar ratio of ester units to carbonate units in the poly(ester-carbonate)s can vary broadly, for example 1:99 to 99:1, specifically, 10:90 to 90:10, more specifically, 25:75 to 75:25, or from 2:98 to 15:85. The molar ratio of ester units to carbonate units in the poly(ester-carbonate)s can vary from 1:99 to 30:70, specifically 2:98 to 25:75, more specifically 3:97 to 20:80, or from 5:95 to 15:85.

The polycarbonate can be a linear homopolymer containing bisphenol A carbonate units (BPA-PC), commercially available under the trade name LEXAN™ from SABIC; a branched Bisphenol A homopolycarbonate with 0.1 to 1.0 mol% of 1,1,1-tris(4-hydroxyphenyl)ethane (THPE) branching agent end-capped with phenol or para-cumylphenol (PCP) end-caps, commercially available under the trade name LEXAN™ from SABIC; or a branched, cyanophenol end-capped bisphenol A homopolycarbonate produced via interfacial polymerization, containing 3 mol% of THPE branching agent, commercially available under the trade name LEXAN™ CFR from SABIC.

The polycarbonate copolymer can be a polycarbonate-polysiloxane copolymer (i.e., a poly(carbonate-siloxane)). For example, the composition can further comprise a polycarbonate-polysiloxane copolymer in an amount such that the composition contains from 0.5 to 5 wt% of siloxane. The polysiloxane blocks comprise repeating diorganosiloxane units as in formula (5) 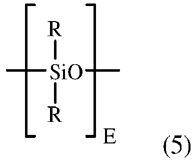 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkyl, C₇₋₁₃ aralkoxy, C₇₋₁₃ alkylaryl, or C₇₋₁₃ alkylaryloxy. The foregoing groups can be fully or partially halogenated with fluorine, chlorine, bromine, or iodine, or a combination thereof. Where a transparent poly(carbonate-siloxane) is desired, R can be unsubstituted by halogen. Combinations of the foregoing R groups can be used in the same copolymer.

The value of E in formula (5) can vary widely depending on the type and relative amount of each component in the thermoplastic composition, the desired properties of the composition, and like considerations. Generally, E has an average value of 2 to 1,000, specifically 2 to 500, 2 to 200, or 2 to 125, 5 to 80, or 10 to 70. For example, E can have an average value of 10 to 80 or 10 to 40; or E can have an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

A combination of a first and a second (or more) poly(carbonate-siloxane) copolymers can be used, wherein the average value of E of the first copolymer is less than the average value of E of the second copolymer.

The polysiloxane blocks can be of formula (6) 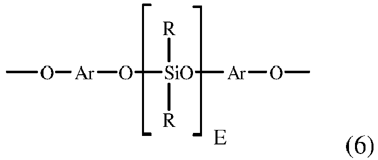 wherein E is as defined above; each R can be the same or different, and is as defined above; and Ar can be the same or different, and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (3) or (6) above. Dihydroxyarylene compounds include 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), 1,1-bis(4-hydroxy-t-butylphenyl) propane, or a combination thereof.

The polysiloxane blocks can be of formula (7) 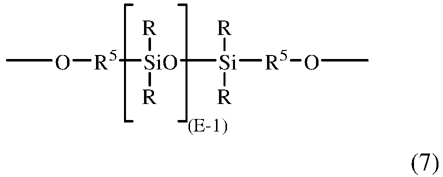 wherein R and E are as described above, and each R⁵ is independently a divalent C₁₋₃₀ organic group, and wherein the polymerized polysiloxane unit is the reaction residue of its corresponding dihydroxy compound. For example, the polysiloxane blocks can be of formula (8): 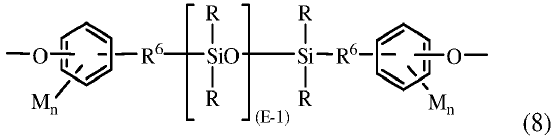 wherein R and E are as defined above. R⁶ in formula (8) is a divalent C₂₋₈ aliphatic. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In Formula (8), M can be bromo or chloro, an alkyl such as methyl, ethyl, or propyl, an alkoxy such as methoxy, ethoxy, or propoxy, or an aryl such as phenyl, chlorophenyl, or tolyl; R⁶ can be a dimethylene, trimethylene or tetramethylene; and R can be a C₁₋₈ alkyl, haloalkyl such as trifluoropropyl, cyanoalkyl, or aryl such as phenyl, chlorophenyl, or tolyl. For example, R can be methyl, or a combination of methyl and trifluoropropyl, or a combination of methyl and phenyl. For example, R can be methyl, M can be methoxy, n can be 1, and R⁶ can be a divalent C₁₋₃ aliphatic group. Exemplary polysiloxane blocks are of formulas (8a), (8b), or (8c) 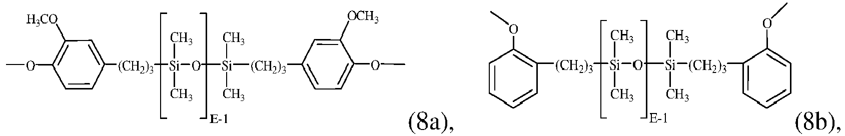 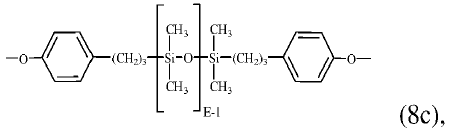 or a combination thereof, wherein E has an average value of 2 to 200, 2 to 125, 5 to 125, 5 to 100, 5 to 50, 20 to 80, or 5 to 20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

The poly(carbonate-siloxane) copolymers can comprise 50 to 99 wt% of carbonate units and 1 to 50 wt% siloxane units. Within this range, the polyorganosiloxane-polycarbonate copolymer can comprise 70 to 98 wt%, more specifically 75 to 97 wt% of carbonate units and 2 to 30 wt%, more specifically 3 to 25 wt% siloxane units.

The polycarbonates or polycarbonate copolymers can have a weight average molecular weight (M_{w}) of 10,000 to 200,000 grams per mole (g/mol), specifically 15,000 to 80,000 g/mol, as measured by gel permeation chromatography (GPC) using a crosslinked styrene-divinylbenzene column and calibrated to polycarbonate standards. For example, the polycarbonate or polycarbonate copolymer can have a weight average molecular weight of 18,000 to 40,000 g/mol.

In preferred embodiments, the composition does not include a poly(carbonate-siloxane) copolymer.

The composition can include one or more polycarbonates and/or polycarbonate copolymers, which can have the same or different M_{w}. For example, the polycarbonate or polycarbonate copolymer can comprise a high molecular weight polycarbonate or polycarbonate copolymer having a M_{w} of greater than 25,000 g/mol and a low molecular weight polycarbonate or polycarbonate copolymer having a M_{w} of less than 25,000 g/mol, as measured by GPC using polycarbonate standards. The weight ratio of high molecular weight polycarbonate or polycarbonate copolymer to low molecular weight polycarbonate or polycarbonate copolymer can be, for example, 5:1 to 1:5, or 3:1 to 1:3, or 2:1 to 1:2, or 1:1. For example, a blend of the high molecular weight polycarbonate and the low molecular weight polycarbonate can have an average molecular weight of 20,000 to 30,000 g/mol for the total composition.

Polycarbonates and polycarbonate copolymers can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 4.0 wt%. Combinations comprising linear polycarbonates and branched polycarbonates can be used.

The composition further includes 5 to 19.7 wt% of a fiber reinforcement, based on the total weight of the composition. For example, the composition can include 5 to 15 wt% or preferably 8 to 12 wt% of a fiber reinforcement. The fiber reinforcement can be a plurality of fibers, wherein the fibers are the same or different.

The fiber reinforcement can be formed of glass fibers, carbon fibers, basalt fibers, or a combination thereof. For example, the fiber reinforcement can comprise or consist of glass fibers. Optionally, the fiber reinforcement can comprise basalt fibers and/or carbon fibers. The fibers can be long fibers or short fibers that are continuous, chopped, woven, or the like. As used herein, the term short fibers refers to a population of fibers having an average fiber length of less than or equal to 5 mm. As used herein, the term long fibers refers to a population of fibers having an average fiber length greater than 5 mm, including for example, a population of fibers having a fiber length in the range of 5 to 20 mm, or 5 to 15 mm.

The fibers can have a length from 0.2 to 20 mm, preferably 0.2 to 10 mm, more preferably 0.7 to 7 mm. The fibers can have various cross-sections, such as a round (or circular), flat, bilobe, or irregular cross-section. The average diameter of the fibers can be from 1 to 25 micrometers (µm), preferably 3 to 20 µm, more preferably 4 to 18 µm, even more preferably 5 to 17 µm.

Preferably, the fiber reinforcement includes a plurality of chopped glass fibers. The term "glass" refers to a material, natural or synthetic, which contains silicon dioxide (SiO₂) or silica as its main material. The glass fibers may be textile glass fibers such as E, A, C, ECR, R, S, D, and/or NE glass fibers, and are desirably E type glass fibers. The more caustic glasses such a soda lime glass, which can sometimes cause polycarbonate degradation and foaming, can be excluded or glass with low amounts of sodium and calcium can be used.

The fibers can further include a coating agent (i.e., sizing). The coating agent can provide for a coated fiber that is bonding or non-bonding with polycarbonate or polycarbonate copolymer. Bonding fibers have a sizing on the surface of the fibers that is compatible with polycarbonate or polycarbonate copolymer, whereas non-bonding fibers have a sizing on their surface that does not promote strong adhesion to polycarbonate or the polycarbonate copolymer. The non-bonding/bonding characteristics of the fibers can be controlled, for example, by coating the fibers with coatings such as an epoxide, polyvinyl acetate, particular polyester resins, starch, acrylic resins, melamine, polyvinyl chloride, polyethylene oxide, polyurethane, polyepoxide, poly(arylene ether) (e.g., phenoxide), polyvinyl alcohol, or a silane coupling agent, to change the bonding properties between the fibers and the polycarbonate or polycarbonate copolymer in the composition.

Examples of bonding coating agents are epoxide, polyepoxide, poly(vinyl acetate), polyester, starch, poly(acrylic acid), poly(meth)acrylate, melamine, poly(vinyl chloride), poly(alkylene oxide) such as poly(C₁₋₃ alkylene oxide), poly(arylene ether), polyurethane, poly(vinyl alcohol), C₁₋₆ organosilanes, or a combination thereof. For example, the bonding coating agent can be a phenolic epoxy resin, an epoxylated carboxylic acid derivative (e.g., a reaction product of an ester of a polycarboxylic acid having one or more unesterified carboxyl groups with a compound including more than one epoxy group), an epoxidized diene polymer, an epoxidized polyene polymer, or a combination thereof. Multiple bonding coating agents can be used.

Examples of non-bonding coating agents include polyolefins, for example, a polyolefin wax, such as a natural or artificial olefin wax. The polyolefin wax can be polyethylene wax, polypropylene wax, polybutylene wax, or copolymers thereof such as polyethylene-propylene wax and polyethylene-butylene wax. An exemplary polyolefinic wax is polyethylene wax. Alpha olefin-ethylene copolymers can also be useful as coating waxes. The polyolefin wax may also include a polar co-monomer such as an unsaturated carboxylic acid, carboxylic ester, or carboxylic acid salt. Other exemplary polyolefin coating agents include paraffin and higher alkyl (e.g., greater than C₈) siloxy and silanol compounds. Multiple non-bonding coating agents can be used.

The coating agent can further include a coupling agent to improve the adhesion between the coating agent and the fibers. For example, the coupling agent can be a functionalized silane such as a tri(C₁₋₆ alkoxy)monoamino silane, tri(C₁₋₆ alkoxy)diamino silane, tri(C₁₋₆ alkoxy)(C₁₋₆ alkyl ureido) silane, tri(C₁₋₆ alkoxy)(epoxy C₁₋₆ alkyl) silane, tri(C₁₋₆ alkoxy)(glycidoxy C₁₋₆ alkyl) silane, tri(C₁₋₆ alkoxy)(mercapto C₁₋₆ alkyl) silane, or a combination thereof. For example, the coupling agent can be (3-aminopropyl)triethoxysilane, (3-glycidoxypropyl)trimethoxysilane, (2-(3,4-epoxycyclohexyl)ethyl)triethoxysilane, (3-mercaptopropyl)trimethoxysilane, (3-(2-aminoethylamino)propyl)triethoxysilane, (3-ureidopropyl)triethoxysilane, or a combination thereof. Particularly useful are aminopropyltriethoxysilane and glycidylpropyltrimethoxysilane. Preferred functionality of the functionalized silane is epoxy functionality or amine functionality.

Other materials that can be included in the coating agent are anti-static agents, lubricants, wetting agents, or the like.

The amount of coating agent can be from 0.1 to 5 wt% based on the weight of the fibers. The coating agent may be applied to the fibers by suitable means, such as immersing the fibers in the coating agent or contacting the fibers with an aqueous emulsion, or suspension of the coating. Other coating methods include using an aqueous dispersion of the sizing applied to the uncoated fiber by a roller in a continuous fashion, which can be followed by a heat treatment or curing step.

The fibers can be provided in the form of monofilament or multifilament fibers and can be used either alone or in combination with other types of fiber, for example, co-weaving or core/sheath, side-by-side, skin-core type or matrix and fibril constructions, or by other methods including those known to one skilled in the art of fiber manufacture. Exemplary co-woven structures include, for example, glass fiber-carbon or the like. Fibers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

Filaments can be made by standard processes, e.g., by steam or air blowing, flame blowing and mechanical pulling. The preferred filaments for plastic reinforcement are made by mechanical pulling. For achieving optimal mechanical properties fiber diameter between 6 to 20 micrometers (µm) can be used with a diameter of from 10 to 15 µm being preferred.

The thermoplastic composition further includes potassium perfluorobutane sulfonate (Rimar salt) in an amount of 0.2 to 0.9 wt%, preferably 0.25 to 0.5 wt%, more preferably 0.3 to 0.4 wt%, based on the total weight of the thermoplastic composition.

Optionally, the composition can further include one or more additional flame retardant sulfonate salts, such as alkyl or perfluoroalkyl sulfonate salts. Alkyl and perfluoroalkyl groups on such compounds can have from 1 to 16 carbon atoms. The alkyl and perfluoroalkyl sulfonate salt includes cation(s) to balance the charge of the sulfonate. Cations include sodium, potassium, ammonium, phosphonium, or the like. Specific examples of alkyl sulfonate salts include, but are not limited to, potassium diphenylsulfone sulfonate and sodium toluenesulfonate. Specific examples of perfluoroalkyl sulfonate salts include, but are not limited to, potassium perfluoroctane sulfonate, tetraethylammonium perfluorohexane sulfonate, sodium toluene sulfonate (NaTS), sodium diphenylsulfone sulfonate, and potassium diphenylsulfone sulfonate (KSS). In some aspects, the composition does not include an additional flame retardant sulfonate salt; in other words, the composition includes potassium perfluorobutane sulfonate and does not contain an additional flame retardant sulfonate salt. Optionally, the flame retardant sulfonate salt can consist of perfluorobutane sulfonate.

The composition also includes an anti-drip agent in an amount of 0.05 to 0.4 wt%, preferably 0.1 to 0.3 wt%, more preferably 0.1 to 0.2 wt%, based on the total weight of the composition. The anti-drip agent can be, for example, a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An exemplary TSAN comprises 50 wt% PTFE and 50 wt% SAN, based on the total weight of the encapsulated fluoropolymer. The SAN can also comprise, for example, 75 wt% styrene and 25 wt% acrylonitrile, based on the total weight of the encapsulated fluoropolymer. For example, the anti-drip agent can include polyphenylene ether, silica, quartz, aluminum silicate, mica, alumina, aluminum hydroxide, calcium carbonate, silicon carbide, silicon nitride, boron nitride, iron oxide, or a combination thereof. Preferably, the composition includes 0.05 to less than 0.4 wt% of an anti-drip agent, more preferably 0.05 to less than 0.4 wt% of TSAN.

The fluorine content of the composition is 0.1 to 0.5 wt%, preferably 0.1 to 0.4 wt%, more preferably 0.1 to 0.3 wt%, based on the total weight of the composition. The thermoplastic composition can be essentially free of chlorine and bromine. Essentially free of chlorine and bromine refers to materials produced without the intentional addition of chlorine or bromine or chlorine or bromine containing materials. It is understood however that in facilities that process multiple products a certain amount of cross contamination can occur resulting in bromine and/or chlorine levels typically on the parts per million by weight scale. With this understanding it can be readily appreciated that essentially free of bromine and chlorine can be defined as having a bromine and/or chlorine content of less than or equal to 100 parts per million by weight (ppm), less than or equal to 75 ppm, or less than or equal to 50 ppm.

The composition can optionally include a phosphorous-containing acid stabilizer. The phosphorous-containing acid stabilizer can be used in an amount of 1 to 20 ppm, preferably 1 to 10 ppm, more preferably 3 to 5 ppm by weight, based on the total weight of the composition. Examples of acid stabilizers include acids, acid salts, esters of acids, or their combinations, such as phosphoric acid, phosphorous acid, hypophosphorous acid, hypophosphoric acid, phosphinic acid, phosphonic acid, metaphosphoric acid, hexametaphosphoric acid, thiophosphoric acid, fluorophosphoric acid, difluorophosphoric acid, fluorophosphorous acid, difluorophosphorous acid, fluorohypophosphorous acid, fluorohypophosphoric acid, or a combination thereof. For example, the acid stabilizer can comprise phosphorous acid, or the acid stabilizer can consist of phosphorous acid.

The thermoplastic compositions can further include additional acids, acid salts, and esters of acids, such as, for example, sulphuric acid, sulphites, zinc phosphate, mono calcium phosphate, or the like.

The thermoplastic composition can further include an impact modifier. Examples of impact modifiers include natural rubber, fluoroelastomers, ethylene-propylene rubber (EPR), ethylene-butene rubber, ethylene-propylene-diene monomer rubber (EPDM), acrylate rubbers, hydrogenated nitrile rubber (HNBR), silicone elastomers, styrene-butadiene-styrene (SBS), styrene-butadiene rubber (SBR), styrene-(ethylene-butene)-styrene (SEBS), acrylonitrile-butadiene-styrene (ABS), acrylonitrile-ethylene-propylene-diene-styrene (AES), styreneisoprene-styrene (SIS), styrene-(ethylene-propylene)-styrene (SEPS), methyl methacrylate-butadiene-styrene (MBS), high rubber graft (HRG), or the like.

An additive composition can be used, comprising one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in polycarbonate or polycarbonate copolymer. The additive composition can include an impact modifier, flow modifier, filler (e.g., glass, carbon, mineral, or metal), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent, or a combination thereof. In general, the additives are used in the amounts known to be effective. For example, the total amount of the additive composition can be 0.001 to 10 wt%, or 0.01 to 5 wt%, based on the total weight of the thermoplastic composition.

Heat stabilizer additives include hindered phenols (e.g., IRGANOX 1010 and IRGANOX 1076), either alone or in combination with organophosphites (e.g. triphenyl phosphite, trimethyl phosphite, tris-(2,6-dimethylphenyl)phosphite, tris-(mixed mono-and dinonylphenyl)phosphite or the like), phosphonates (e.g, dimethylbenzene phosphonate or the like), or combinations thereof. The heat stabilizer can be tris(2,4-di-t-butylphenyl) phosphite available as IRGAPHOS 168. Heat stabilizers can be used in amounts of 0.01 to 2 wt%, based on the total weight of polymer in the composition.

There is considerable overlap among plasticizers, lubricants, and mold release agents, which include, for example, glycerol tristearate (GTS), phthalic acid esters (e.g, octyl-4,5-epoxy-hexahydrophthalate), tris-(octoxycarbonylethyl)isocyanurate, tristearin, di- or polyfunctional aromatic phosphates (e.g, resorcinol tetraphenyl diphosphate (RDP), the bis(diphenyl) phosphate of hydroquinone and the bis(diphenyl) phosphate of bisphenol A); poly-alpha-olefins; epoxidized soybean oil; mineral oils; silicones, including silicone oils (e.g., poly(dimethyl diphenyl siloxanes); esters, for example, fatty acid esters (e.g, alkyl stearyl esters, such as, methyl stearate, stearyl stearate, and the like), waxes (e.g, beeswax, montan wax, paraffin wax, or the like), or a combination thereof. These are generally used in amounts of 0.01 to 15 wt%, based on the total weight of the polymer in the composition.

Reinforcing fillers can include, but are not limited to, glass spheres such as hollow and solid glass spheres, silicate spheres, or the like; kaolin clay, including hard kaolin, soft kaolin, calcined kaolin, kaolin comprising various coatings known in the art to facilitate compatibility with the polymer matrix, or the like; flaked fillers such as glass flakes, glass spheres, flaked silicon carbide, aluminum oxides, or the like; organic fillers such as polytetrafluoroethylene; as well as mica, clay, talc, feldspar, fillite, quartz, quartzite, perlite, tripoli, diatomaceous earth, carbon black, or the like, or a combination thereof. When used as a less isotropic filler, the reinforcing filler can include milled glass, glass flakes, glass or ceramic bubbles, or glass spheres. The composition can include a combination of the fiber reinforcement and a platy filler such as glass flake, mica, or a combination thereof. Without being bound by theory, combinations of fibers with platy fillers may be beneficial in producing molded articles with greater strength and less warp, and with better flatness and improved dimensional stability over the use of cylindrical fibers.

Antioxidant additives include organophosphites such as tris(nonyl phenyl) phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or a combination thereof. Antioxidants are used in amounts of 0.01 to 0.1 parts by weight, based on 100 parts by weight of the total composition.

The thermoplastic composition can further include other flame retardants. Additional inorganic flame retardants that can be used include salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, and/or Na₃AlF₆. When present, these inorganic flame retardant salts are present in amounts of 0.01 to 10 wt%, more specifically 0.02 to 1 wt%, based on the total weight of the composition.

The composition optionally includes a colorant, for example a colorant selected from Solvent Green 3, Solvent Green 28, Solvent Green 38, Pigment Green 50, Pigment Green 36, Solvent Red 52, Solvent Red 101, Solvent Red 111, Solvent Red 135, Solvent Red 169, Solvent Red 179, Solvent Red 207, Solvent Red 242, Pigment Red 101, Disperse Red 22, Vat Red 41, Solvent Orange 60, Solvent Orange 63, Disperse Orange 47, Solvent Violet 13, Solvent Violet 14, Solvent Violet 36, Solvent Violet 50, Disperse Violet 26/31, Pigment Blue 29, Pigment Blue 60, Copper Phthalocyanine Pigment Blue 15.4, Disperse Blue 73, Solvent Blue 97, Solvent Blue 101, Solvent Blue 104, Solvent Blue 122, Solvent Blue 138, Pigment Yellow 53, Pigment Yellow 138, Pigment Yellow 139, Disperse Yellow 201, Solvent Yellow 33, Solvent Yellow 114, Solvent Yellow 93, Solvent Yellow 98, Solvent Yellow 163, Solvent Yellow 160:1, Solvent Yellow 188, Pigment Brown 24, Amino Ketone Black, chromium oxide, carbon black, channel black, Pigment Black 6, Pigment Black 7, zinc sulfide, zinc oxide, titanium dioxide, or a combination thereof. The colorant can include, for example, titanium dioxide. When present, colorants can be used in amounts of 0.01 to 12 wt%, preferably 0.01 to 6 wt%, more preferably 0.01 to 2 wt%, based on the total weight of the composition.

The composition can have a notched Izod impact strength of at least 6 kilojoules per square meter (kJ/m²), preferable at least 8 kJ/m² when measured at 23°C and at a thickness of 3 mm per ISO 180 (2000).

The composition can have a melt volume flow rate (MVR) of 5 to 30 cubic centimeters per 10 minutes (cm³/10 min) when measured at 300°C and 1.2 kilograms (kg) load for 5 minutes per ISO 1133 (2011).

The composition can have a tensile modulus of 2,000 to 6,000 mega Pascal (MPa), preferably 3,000 to 5,000 MPa, when measured at 5 millimeters per minute (mm/min) per ISO 527 (2012).

The compositions can be manufactured by various methods. For example, powdered polycarbonate or polycarbonate copolymer, and other optional components are first blended (e.g., optionally with any fillers, in a high speed mixer or by hand mixing). The blend is then fed into the throat of an extruder (e.g., a twin-screw extruder) via a hopper. Alternatively, at least one of the components can be incorporated into the composition by feeding it directly into the extruder at the throat or downstream through a sidestuffer, or by being compounded into a masterbatch with a desired polymer and fed into the extruder. The extruder is generally operated at a temperature higher than that necessary to cause the composition to flow. The extrudate can be immediately quenched in a water bath and pelletized. Such pellets can be used for subsequent molding, shaping, or forming.

Shaped, formed, or molded articles comprising the compositions are also provided. The compositions can be molded into useful shaped articles by a variety of methods, such as injection molding, extrusion, rotational molding, blow molding, and thermoforming. Some example of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In articles molded from the thermoplastic compositions, the fiber length is typically shorter presumably due to fiber fragmentation during compounding of the composition. The length of such short fibers present in articles can be less than 4 mm. The article prepared from the thermoplastic composition can have improved stability during exposure to high temperatures and high relative humidity.

The article can be a molded article, a film, a sheet, a layer of a multilayer film, or a layer of a multilayer sheet. For example, the article can be an automotive exterior component such as a bumper, a grille, a wheel cover, an exterior light, or an auto lens. The article can be an automotive interior component, such as a mirror housing, a pillar, an instrument panel, a glove box, a door component, an interior trim component, or a part within the engine compartment. The article can be a component for an agricultural tractor or device, or a construction vehicle or device. The article can be a component for a marine or personal water craft. The article can be an aircraft or train component, for example a seating component, a sidewall part, or a ceiling part. The article can be a plumbing component, such as a valve part or more particularly a pump part. The article can be a heating or cooling component, such as a furnace part, a heat pump part, or an air conditioner part, more particularly a humidifier housing, a thermostat control housing, an air conditioner drain pan, an outdoor cabinet, or a component in a plenum space. The article can be a personal or business electronic part, such as a router part, a printer part, a computer component, an microelectronic component such as a part of a capacitor, diode, or resistor, a projector part, a display part, a photocopier part, a printer toner cartridge enclosure; a cell phone enclosure or part, a walkie-talkie enclosure or part, a scanner enclosure or part, a media/MP3/MP4 player enclosure or part, a radio enclosure or part, a GPS system enclosure or part, an eBook enclosure or part, a tablet enclosure or part, a wearable electronic device part, a smart watch part, a wearable training/tracking device part, a wearable activity/sleep monitoring system part, a wearable electronic wristband part, or an electronic glasses part. The article can be a home appliance component, such as a hair drier part, an iron part, a coffee maker part, a toaster part, a washing machine part, a refrigerator part, a microwave part, an oven part, a smoke detector part, or a power tool part. The article can be an electrical component, such as an electric wiring enclosure, a lighting part, a fiber optic part, or a telecom enclosure or infrastructure part. The article can be a medical device component, such as a medical or dental instrument part, a medical or dental lighting part, a medical or dental instrument tray, and X-ray equipment part, or a medical scanner enclosure or part. The article can be a safety component, such as a fire helmet or part, a safety shield or part, or safety glasses or part. The article can be a cooking component, such as a cookware part or a cutlery part. The article can be a building component, such as an animal cage or part, a greenhouse or part, or a sun room or part. The article can be an industrial component, such as a hand held tool enclosure or part, or a fan blade or part. These descriptions can be interchangeable and the article can be alternatively described using one or more of the descriptions. For example, the display on a medical device could be described as a medical instrument part or a display part.

The molded article comprising the composition can have a UL94 flammability rating of V0 at a thickness of 1.5 mm; a UL94 flammability rating of V0 at a thickness of 1.2 mm; preferably a UL94 flammability rating of V0 at a thickness of 1.0 mm, even more preferably a UL94 flammability rating of V0 at a thickness of 0.8 mm. The UL94 flammability rating is described in the Examples, below.

The molded article of the composition further comprising the phosphorous-containing acid stabilizer can have a UL94 flammability rating of V0 at a thickness of 1.0 mm, preferably a UL94 flammability rating of V0 at a thickness of 0.8 mm.

The molded article of the composition can have a UL94 flame out time (FOT) for 10 bars of 70 seconds or less, or 60 seconds or less, or 50 seconds or less at a thickness of 1.5 mm; preferably a UL94 flame out time for 10 bars of 80 seconds or less, or 70 seconds or less, or 60 seconds or less at a thickness of 1.0 mm; more preferably a UL94 flame out time for 10 bars of 9 seconds or less, or 90 seconds or less, or 80 seconds or less at a thickness of 0.8 mm. FOT is the sum total of flame out times for 10 bars.

This disclosure is further illustrated by the following examples, which are nonlimiting.

### EXAMPLES

The materials used for the examples are provided in Table 1. The amount of materials in the formulations is given in weight percent unless otherwise indicated.

**Table 1**

| Material | Description | Source |
|---|---|---|
| PC-1 | Linear Bisphenol A polycarbonate end-capped with para-cumyl phenol (PCP), produced via interfacial polymerization, Mw of approximately 21,800 g/mol as determined by GPC using bisphenol A homopolycarbonate standards | SABIC |
| PC-2 | Linear Bisphenol A polycarbonate end-capped with phenol, produced via interfacial polymerization, Mw of approximately 30,500 g/mol as determined by GPC using bisphenol A homopolycarbonate standards | SABIC |
| GF | Chopped E-glass fiber, 14 micrometer diameter, polyolefin amino silane coating (trade name OCV-415CA) | Owens Corning Vetrotex |
| Rimar salt | Potassium perfluorobutane sulfonate | 3M |
| PETS | Pentaerythrityl tetrastearate, >90% esterified | Faci |
| TSAN | Poly(tetrafluoroethylene) encapsulated in styrene-acrylonitrile copolymer (50:50) | SABIC |
| BUTOS | Butyl tosylate, master-batch containing 0.3 wt% of butyl tosylate in PC-1, CAS Reg. No. 778-28-9 | Sigma-Aldrich |
| Phosphorous acid | Phosphorous acid solution (45 wt% aqueous solution); masterbatch containing 99.38 wt% of PC-1 and 0.62 wt% of the 45 wt% aqueous solution of phosphorous acid | Quaron |
| Phosphite | Tris(di-t-butyl phenyl)phosphite, CAS Reg. No. 31570-04-4 | Ciba |
| Titanium dioxide | Coated titanium dioxide | Kronos |

Samples were extruded as follows. The components were pre-mixed in a paint shaker, and the glass fibers were added after initial mixing to prevent excessive fuzzing. The blends were extruded under a minimal vacuum (e.g., 0.15 to 0.6 atmospheres (atm) or 15.2 to 60.8 kilopascals (kPa)) on a ZSK-25 millimeter (mm) co-rotating twin screw extruder (Krupp Werner and Pfleiderer, GmbH, Germany) and cut into pellets. The extrusion conditions are shown in Table 2.

**Table 2**

| Parameter | Unit | Value |
|---|---|---|
| Feed Temperature | °C | 40 |
| Zone 1 Temperature | °C | 200 |
| Zone 2 Temperature | °C | 250 |
| Zone 3 Temperature | °C | 270 |
| Zones 4-9 Temperatures | °C | 310 |
| Screw speed | rpm | 300 |
| Throughput | kg/hr | 14 |
| Torque | % | Max. |

Samples were molded as follows. Resultant pellets were dried for 2 hours at 120°C in a forced air-circulating oven. Injection molding using the resultant pellets was performed on an Engel 45, 75 or 85 injection molding machine according to the profiles shown in Table 3.

**Table 3**

| Parameters | Unit | Standard 1 | Abusive 1 | Standard 2 | Abusive 2 |
|---|---|---|---|---|---|
| Temperature | °C | 300 | 300 | 330 | 330 |
| Load | kg | 1.2 | 1.2 | 1.2 | 1.2 |
| Dwell time | min | 5 | 12 | 5 | 12 |

The following methods were used to evaluate the molded samples.

Molecular weight was determined by gel permeation chromatography (GPC), which was performed by partially dissolving samples in dichloromethane and analyzed using an Agilent model 1260 GPC instrument equipped with a PL MiniMIX-C gel column (length of 250 mm, inner diameter of 4.6 mm, and particle size of 5 µm) and a UV detector. The mobile phase was dichloromethane with a flow rate of 0.3 milliliters per minute (mL/min) and the column temperature was held at 35°C. Agilent ChemStation software with GPC add-on was used for calibration and molar mass calculations. All molecular weights were reported relative to polycarbonate by using a calibration curve based on monodisperse polycarbonate standards.

Melt volume flow rate (MVR) was measured according to ISO 1133 (2011) at 300°C or 330°C with a 1.2 kg load for 5 or 12 minutes. MVR measurements were performed according to the conditions in Table 4. MVR is reported as cubic centimeters per 10 minutes (cm³/10 min).

Izod notched impact (INI) measurements were performed on notched 3 mm Izod bars at 23°C (unless otherwise indicated), in accordance with the ISO 180 (2000) standard with a 5.5 Joule hammer, and are reported in units of kilojoules per square meter (kJ/m²) or joules per meter (J/m).

Tensile modulus was measured according to ISO 527 (2012) at 5 mm/min, and is reported in units of megapascal (MPa).

Flammability tests were performed following the procedure of Underwriter's Laboratory Bulletin 94 entitled "Tests for Flammability of Plastic Materials for Parts in Devices and Appliances" (ISBN 0-7629-0082-2), Fifth Edition, Dated October 29, 1996, incorporating revisions through and including December 12, 2003. Several ratings can be applied based on the rate of burning, time to extinguish, ability to resist dripping, and whether or not drips are burning. According to this procedure, materials can be classified as HB, V0, UL94 V1, V2, VA, and/or VB. These classifications are separately determined for each sample thickness.

The data were also analyzed by calculation of the total flame out time (seconds, s). FOT is the sum total of flame out times measured for 10 sample bars.

The compositions and properties of Examples 1 to 7 (E1 to E7) and Comparative Examples 1 to 3 (C1 to C6), which were prepared as described above, are provided in Table 4. All amounts are in weight percent (wt%) of the total composition.

**Table 4**

| Component | Unit | C1 | E1 | E2 | E3 | E4 | E5 | C2 | C3 | E6 | E7 | C4 | C5 | C6 |
|---|---|---|---|---|---|---|---|---|---|---|---|---|---|---|
| PC-1 | % | 31.6 | 31.55 | 31.45 | 31.45 | 31.35 | 31.25 | 31.25 | 31.6 | 31.6 | 31.6 | 35.8 | 35.75 | 35.65 |
| PC-2 | % | 58.55 | 58.5 | 58.5 | 58.4 | 58.3 | 58 | 58 | 51.92 | 51.82 | 51.82 | 63.6 | 63.4 | 63.4 |
| GF | % | 9.2 | 9.2 | 9.2 | 9.2 | 9.2 | 9.2 | 9.2 | 9.2 | 9.2 | 9.2 | - | - | - |
| Rimar salt | % | 0.1 | 0.2 | 0.3 | 0.4 | 0.6 | 0.9 | 1 | 0.2 | 0.3 | 0.4 | 0.05 | 0.3 | 0.4 |
| PETS | % | 0.24 | 0.24 | 0.24 | 0.24 | 0.24 | 0.24 | 0.24 | 0.24 | 0.24 | 0.24 | 0.24 | 0.24 | 0.24 |
| TSAN | % | 0.14 | 0.14 | 0.14 | 0.14 | 0.14 | 0.14 | 0.14 | 0.14 | 0.14 | 0.14 | 0.14 | 0.14 | 0.14 |
| H₃PO₃ | % | 0.14 | 0.14 | 0.14 | 0.14 | 0.14 | 0.14 | 0.14 | 0.14 | 0.14 | 0.14 | 0.14 | 0.14 | 0.14 |
| Phosphite | % | 0.03 | 0.03 | 0.03 | 0.03 | 0.03 | 0.03 | 0.03 | 0.03 | 0.03 | 0.03 | 0.03 | 0.03 | 0.03 |
| TiO₂ | % | - | - | - | - | - | - | - | 6.5 | 6.5 | 6.5 | - | - | - |
| Yellow 138 | % | - | - | - | - | - | - | - | 0.03 | 0.03 | 0.03 | - | - | - |
| Property | | | | | | | | | | | | | | |
| MVR | cm³/10 min | 8.8 | 8.8 | 8.9 | 8.6 | 8.6 | 8.9 | 10.1 | 7.9 | 7.9 | 7.7 | 13.5 | 13.7 | 14 |
| INI | kJ/m² | - | 6.6 | - | - | 7.6 | 8.9 | - | - | - | - | - | - | - |
| Tensile modulus | MPa | 3540 | 3527 | - | 3512 | 3544 | - | - | 3446 | 3687 | 3515 | 2343 | 2344 | 2336 |
| UL94, 1.5 mm | - | V1 | V0 | V0 | V0 | V0 | V0 | V1 | - | - | - | V2 | V0 | V0 |
| FOT, 1.5 mm | s | 67.8 | 55.2 | 50 | 68.1 | 68 | 68 | 95.8 | - | - | - | 85 | 86 | 92 |
| UL94, 1.0 mm | - | - | - | - | - | - | - | - | V1 | V0 | V0 | - | - | - |
| FOT, 1.0 mm | s | - | - | - | - | - | - | - | 90.2 | 62 | 67 | - | - | - |
| Fluorine content | wt% | 0.1 | 0.15 | 0.2 | 0.26 | 0.36 | 0.51 | 0.56 | 0.15 | 0.2 | 0.26 | 0.05 | 0.2 | 0.26 |

As shown in Table 4, a loading of 0.1 wt% of Rimar salt was not sufficient to achieve a V0 rating at a thickness of 1.5 mm (C1). The results show that Example 2 (0.3 wt% of Rimar salt) had the shortest FOT. The results also show that loadings of Rimar salt above 0.9 wt%, such as 1 wt% (C2), did not achieve a V0 rating at a thickness of 1.5 mm, whereas loadings between 0.2 and 0.9 wt% provide a V0 rating at a thickness of 1.5 mm.

The effects of including a light color package (TiO₂ and Yellow 138) on flame retardance is demonstrated by Examples 6 and 7 in Table 4. The compositions including the light color package in Examples 6 (0.3 wt% of Rimar salt) and 7 (0.4 wt% of Rimar salt) have UL94 V0 ratings at 1 mm. The FOT for Example 7 was greater than the FOT for Example 6, which is similar to the increase in FOT at higher loadings of Rimar salt seen in Examples 2 and 3. Comparative Example 3 shows that the light color package does not provide a UL94 V0 rating at 1 mm when the Rimar salt is present at a loading of 0.2 wt%.

Comparative Examples 4 to 6 show that the absence of glass fibers increased the observed flame out time (FOT). In particular, although Comparative Examples 5 and 6 included 0.3 wt% and 0. 4 wt% of Rimar salt, respectively, both compositions had a FOT that exceeded 85 seconds. For Comparative Example 4, which included 0.05 wt% of Rimar salt, the UL94 rating was only V2 at 1.5 mm and the FOT was 85 seconds.

The compositions and properties of Example 8 (E8) and Comparative Examples 7 and 8 (C7 and C8), which were prepared as described above, are provided in Table 5. All amounts are in weight percent (wt%) of the total composition.

**Table 5**

| Component | Unit | E8 | C7 | C8 |
|---|---|---|---|---|
| PC-1 | % | 31.86 | 32 | 31.5 |
| PC-2 | % | 58 | 58 | 58 |
| GF | % | 9.2 | 9.2 | 9.2 |
| Rimar salt | % | 0.2 | 0.2 | 0.2 |
| PETS | % | 0.25 | 0.25 | 0.25 |
| TSAN | % | 0.3 | 0.3 | 0.3 |
| H₃PO₃ | % | 0.14 | - | - |
| BUTOS | | - | - | 0.5 |
| Phosphite | % | 0.05 | 0.05 | 0.05 |
| Property | | | | |
| MVR | cm³/10 min | 6.2 | 6.5 | 6.2 |
| INI | J/m | 120 | 107 | 113 |
| Tensile modulus | MPa | 3783 | 3620 | 3544 |
| UL94, 1.0 mm | - | V0 | V0 | V0 |
| FOT, 1.0 mm | s | 57 | 105 | 92 |
| UL94,0.8mm | - | V0 | V1 | V1 |
| FOT, 0.8 mm | s | 84 | 112 | 92 |
| Fluorine content | wt% | 0.22 | 0.22 | 0.22 |

Table 5 provides the properties of compositions including a Rimar salt loading of 0.2 wt%. In Example 8, a UL94 rating of V0 was achieved at both 1.0 mm and 08 mm. Comparative Example 7, which did not include 0.14 wt% of phosphorous acid, achieved a UL94 rating of only V1 at 0.8 mm. Comparative Example 8 included 0.5 wt% of BUTOS instead of phosphorous acid, and the result was a UL94 rating of V1 at 0.8 mm. The FOT for Comparative Examples 7 and 8 were greater than 90 at both 1.0 and 0.8 mm, whereas the FOT for Example 8 was less than 60 at 1.0 mm and less than 90 at 0.8 mm. In addition, the composition including phosphorous acid (E8) provided greater impact resistance and higher tensile modulus than both Comparative Examples 7 and 8. The role of a phosphorous-containing acid stabilizer, such as phosphorous acid, in providing for this combination of observed improved notched Izod impact, tensile modulus, and UL94 properties is surprising and unexpected in view of the prior art.

In summary, the exemplary compositions with Rimar salt loadings of 0.2 to 0.9 wt% and 0.14 to 0.3 wt% of TSAN can achieve UL94 ratings of V0 at a thickness of 1.5 mm. Incorporation of a light color package (TiO₂ and Yellow 138) into compositions with Rimar salt loadings of 0.3 and 0.4 wt% improves flame retardance and results in a UL94 rating of V0 at a thickness of 1.0 mm. The flame retardance is improved when phosphorous acid is included in the composition, and a UL94 rating of V0 at thicknesses of 1.0 mm and 0.8 mm can be achieved at a Rimar salt loading is 0.2 wt%. In addition, the inclusion of glass fibers in the compositions achieved improved FOT.

This disclosure further encompasses the following Aspects.
Aspect 1: A flame retardant thermoplastic composition, comprising 40 to 94 wt%, preferably 60 to 92 wt%, more preferably 75 to 90 wt% of a polycarbonate, a polycarbonate copolymer, or a combination thereof (preferably polycarbonate copolymer); 5 to 19.7 wt%, preferably 5 to 15 wt%, more preferably 8 to 12 wt% of a fiber reinforcement; 0.2 to 0.9 wt%, preferably 0.2 to 0.5 wt%, more preferably 0.25 to 0.4 wt% of potassium perfluorobutane sulfonate; optionally 1 to 20 ppm, preferably 1 to 10 ppm, more preferably 3 to 5 ppm by weight of a phosphorous-containing acid stabilizer; optionally a colorant; and 0.05 to 0.4 wt%, preferably 0.1 to 0.3 wt%, more preferably 0.1 to 0.2 wt% of an anti-drip agent, wherein the fluorine content of the composition is 0.1 to 0.5 wt%, preferably 0.1 to 0.4 wt%, more preferably 0.1 to 0.3 wt%, wherein all weight percent values are based on the total weight of the composition, and wherein the total weight percent is 100 wt%, and preferably wherein a molded article of the composition has a UL94 flammability rating of V0 at a thickness of 1.5 mm, preferably at a thickness of 1.2 mm, more preferably at a thickness of 1.0 mm or 0.8 mm.
Aspect 2: The composition of aspect 1, comprising 1 to 10 ppm, preferably 3 to 5 ppm by weight of the phosphorous-containing acid stabilizer.
Aspect 3: The composition of aspect 1 or 2, wherein the phosphorous-containing acid stabilizer is selected from phosphoric acid, phosphorous acid, hypophosphorous acid, hypophosphoric acid, phosphinic acid, phosphonic acid, metaphosphoric acid, hexainetaphosphoric acid, thiophosphoric acid, fluorophosphoric acid, difluorophosphoric acid, fluorophosphorous acid, difluorophosphorous acid, fluorohypophosphorous acid, fluorohypophosphoric acid, or a combination thereof; more preferably wherein the acid stabilizer is phosphorous acid.
Aspect 4: The composition of any one or more of the preceding aspects, further comprising an additional sulfonate salt selected from potassium perfluorooctane sulfonate, tetraethylammonium perfluorohexane sulfonate, potassium diphenylsulfone sulfonate, sodium toluenesulfonate, or a combination thereof.
Aspect 5: The composition of any one or more of the preceding aspects, wherein the polycarbonate comprises a bisphenol A polycarbonate homopolymer comprising repeating units derived from bisphenol A; preferably wherein the polycarbonate has an M_{w} weight of 18,000 to 40,000 g/mol, as measured by gel permeation chromatography using polycarbonate standards.
Aspect 6: The composition of any one or more of the preceding aspects, wherein the polycarbonate comprises a high molecular weight polycarbonate having a M_{w} greater than 25,000 g/mol, and a low molecular weight polycarbonate having a M_{w} less than 25,000 g/mol, as measured by gel permeation chromatography using polycarbonate standards.
Aspect 7: The composition of any one or more of the preceding aspects, wherein the anti-drip agent is selected from polytetrafluoroethylene, polytetrafluoroethylene encapsulated in styrene acrylonitrile copolymer, polyphenylene ether, silica, quartz, aluminum silicate, mica, alumina, aluminum hydroxide, calcium carbonate, silicon carbide, silicon nitride, boron nitride, iron oxide, or a combination thereof.
Aspect 8: The composition of any one or more of the preceding aspects, wherein the fiber reinforcement is selected from glass fibers, carbon fibers, basalt fibers, or a combination thereof, preferably wherein the fiber reinforcement is a plurality of glass fibers.
Aspect 9: The composition of any one or more of the preceding aspects, wherein the fiber reinforcement further comprises a bonding coating agent or a non-bonding coating agent, wherein the bonding coating agent is selected from epoxide, poly(vinyl acetate), polyester, starch, poly(acrylic acid), melamine, poly(vinyl chloride), poly(C₁₋₃ alkylene oxide), polyurethane, polyepoxide, poly(vinyl alcohol), C₁₋₆ organosilane, or a combination thereof, and wherein the non-bonding coating agent comprises a polyolefin coating agent; preferably wherein the non-bonding coating agent is selected from polyethylene wax, polypropylene wax, polybutylene wax, polyethylene-propylene wax, polyethylene-butylene wax, or a combination thereof; preferably wherein the bonding coating agent or the non-bonding coating agent further comprises a silane coupling agent, preferably wherein the silane coupling agent is selected from tri(C₁₋₆ alkoxy)monoamino silane, tri(C₁₋₆ alkoxy)diamino silane, tri(C₁₋₆ alkoxy)(C₁₋₆ alkyl ureido) silane, tri(C₁₋₆ alkoxy)(epoxy C₁₋₆ alkyl) silane, tri(C₁₋₆ alkoxy)(glycidoxy C₁₋₆ alkyl) silane, tri(C₁₋₆ alkoxy)(mercapto C₁₋₆ alkyl) silane, or a combination thereof.
Aspect 10: The composition of any one or more of the preceding aspects, further comprising a polycarbonate-polysiloxane copolymer in an amount such that the composition contains from 0.5 to 5 wt% of siloxane, based on the total weight of the composition.
Aspect 11: The composition of any one or more of the preceding aspects, wherein a molded article of the composition has a UL94 flame out time for 10 bars of 70 seconds or less, or 60 seconds or less, or 50 seconds or less at a thickness of 1.5 mm; preferably wherein the molded article of the thermoplastic composition has a UL94 flame out time for 10 bars of 80 seconds or less, or 70 seconds or less, or 60 seconds or less at a thickness of 1.0 mm; more preferably wherein the molded article of the thermoplastic composition has a UL94 flame out time for 10 bars of 100 seconds or less, or 90 seconds or less, or 80 seconds or less at a thickness of 0.8 mm.
Aspect 12: The composition of any one or more of the preceding aspects, wherein the thermoplastic composition has one or more of: a notched Izod impact strength of at least 6 kJ/m², preferably of at least 8 kJ/m², when measured at 23°C and at a thickness of 3 mm per ISO 180 (2000); a melt volume flow rate of 5 to 30 cm³/10 minutes when measured at 300°C and 1.2 kg load for 5 minutes per ISO 1133 (2011); or a tensile modulus of 2,000 to 6,000 MPa, preferably 3,000 to 5,000 MPa, when measured at 5 mm/min per ISO 527 (2012).
Aspect 13: The composition of any one or more of the preceding aspects, comprising 1 to 20 ppm, preferably 1 to 10 ppm, more preferably 3 to 5 ppm by weight of phosphorous acid.
Aspect 15: The composition of any one or more of the preceding aspects, wherein the fiber reinforcement comprises (preferably consists of) a plurality of glass fibers.
Aspect 16: The composition of any one or more of the preceding aspects, comprising 0.3 wt% to 0.4 wt% of potassium perfluorobutane sulfonate, based upon a total weight of the composition.
Aspect 17: The composition of any one or more of aspects 1 to 12, comprising 75 to 90 wt% of one or more homopolycarbonates; 8 to 12 wt% of a plurality of glass fibers; 0.2 wt% to 0.9 wt% of potassium perfluorobutane sulfonate; 1 to 20 ppm by weight of phosphorous acid; and 0.1 to 0.3 wt% of an anti-drip agent; wherein a molded article of the composition has a UL94 flammability rating of V0 at a thickness of 1.5 mm, or 1.0 mm, or 0.8 mm.
Aspect 18: The composition of any one or more of aspects 1 to 12, comprising 75 to 90 wt% of one or more polycarbonate copolymers; 8 to 12 wt% of a plurality of glass fibers; 0.2 wt% to 0.9 wt% of potassium perfluorobutane sulfonate; 1 to 20 ppm by weight of phosphorous acid; and 0.1 to 0.3 wt% of an anti-drip agent; wherein a molded article of the composition has a UL94 flammability rating of V0 at a thickness of 1.5 mm, or 1.0 mm, or 0.8 mm.
Aspect 18A: The composition of any one or more of the preceding aspects, wherein the composition does not contain a poly(carbonate-siloxane).
Aspect 19: An article comprising the thermoplastic composition of any one or more of the preceding aspects.
Aspect 20: The article of aspect 19, wherein the article is a molded article, a film, a sheet, a layer of a multilayer film, or a layer of a multilayer sheet.
Aspect 21: The use of the thermoplastic composition of any one or more of aspects 1-18 as a film, a sheet, a layer of a multilayer film, or a layer of a multilayer sheet.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. "Combination thereof' is open to like elements not specifically named. "Or" means "and/or" unless clearly stated otherwise. "Combination thereof' is open, and includes combinations of the named items, as well as like items not named. The terms "a" and "an" and "the" do not denote a limitation of quantity, and are to be construed to cover both the singular and the plural, unless otherwise indicated herein or clearly contradicted by context. Thus, for example, reference to "a glass fiber" includes mixtures of two or more such glass fibers.

As used herein, the terms "optional" or "optionally" mean that the subsequently described event, condition, component, or circumstance may or may not occur, and that the description includes instances where said event or circumstance occurs and instances where it does not.

Unless specified to the contrary herein, all test standards are the most recent standard in effect as of the filing date of this application, or, if priority is claimed, the filing date of the earliest priority application in which the test standard appears.

Technical and scientific terms used herein have the same meaning as is commonly understood by one of skill in the art to which this application belongs. All cited patents and patent applications are incorporated herein by reference in their entirety.

Compounds are described using standard nomenclature. "Alkyl" means a branched or straight chain, unsaturated hydrocarbon group. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent mono- or multicyclic group having one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g., benzyl), C₇₋₁₂ alkylarylene (e.g, toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the compound or group, including those of any substituents.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A flame retardant thermoplastic composition, comprising:
40 to 94 weight percent, preferably 60 to 92 weight percent, more preferably 75 to 90 weight percent of a polycarbonate, a polycarbonate copolymer, or a combination thereof, preferably comprises a polycarbonate copolymer;
5 to 19.7 weight percent, preferably 5 to 15 weight percent, more preferably 8 to 12 weight percent of a fiber reinforcement;
0.2 to 0.9 weight percent, preferably 0.2 to 0.5 weight percent, more preferably 0.25 to 0.4 weight percent of potassium perfluorobutane sulfonate;
optionally 1 to 20 parts per million, preferably 1 to 10 parts per million, more preferably 3 to 5 parts per million by weight of a phosphorous-containing acid stabilizer;
optionally a colorant; and
0.05 to 0.4 weight percent, preferably 0.1 to 0.3 weight percent, more preferably 0.1 to 0.2 weight percent of an anti-drip agent,
wherein the fluorine content of the composition is 0.1 to 0.5 weight percent, preferably 0.1 to 0.4 weight percent, more preferably 0.1 to 0.3 weight percent,
wherein all weight percent values are based on the total weight of the composition, and wherein the total weight percent is 100 wt%, and
preferably wherein a molded sample of the thermoplastic composition has a UL94 flammability rating of V0 at a thickness of 1.5 mm, preferably at a thickness of 1.2 mm, more preferably at a thickness of 1.0 mm or 0.8 mm.

2. The composition of claim 1, comprising 1 to 20 parts per million, preferably 1 to 10 parts per million, more preferably 3 to 5 parts per million by weight of a phosphorous-containing acid stabilizer, based on the total weight of the composition.

3. The composition of claim 1 or 2, wherein the phosphorous-containing acid stabilizer is selected from phosphoric acid, phosphorous acid, hypophosphorous acid, hypophosphoric acid, phosphinic acid, phosphonic acid, metaphosphoric acid, hexainetaphosphoric acid, thiophosphoric acid, fluorophosphoric acid, difluorophosphoric acid, fluorophosphorous acid, difluorophosphorous acid, fluorohypophosphorous acid, fluorohypophosphoric acid, or a combination thereof; more preferably wherein the acid stabilizer is phosphorous acid.

4. The composition of any one or more of the preceding claims, further comprising an additional sulfonate salt selected from potassium perfluorooctane sulfonate, tetraethylammonium perfluorohexane sulfonate, potassium diphenylsulfone sulfonate, sodium toluenesulfonate, or a combination thereof.

5. The composition of any one or more of the preceding claims, wherein the polycarbonate comprises a bisphenol A polycarbonate homopolymer comprising repeating units derived from bisphenol A; preferably wherein the polycarbonate has an M_{w} of 18,000 to 40,000 grams per mole, as measured by gel permeation chromatography using polycarbonate standards.

6. The composition of any one or more of the preceding claims, wherein the polycarbonate comprises a high molecular weight polycarbonate having a M_{w} greater than 25,000 grams per mole and a low molecular weight polycarbonate having a M_{w} less than 25,000 grams per mole, as measured by gel permeation chromatography using polycarbonate standards.

7. The composition of any one or more of the preceding claims, wherein the anti-drip agent is selected from polytetrafluoroethylene, polytetrafluoroethylene encapsulated in styrene acrylonitrile copolymer, polyphenylene ether, silica, quartz, aluminum silicate, mica, alumina, aluminum hydroxide, calcium carbonate, silicon carbide, silicon nitride, boron nitride, iron oxide, or a combination thereof.

8. The composition of any one or more of the preceding claims, wherein the fiber reinforcement is selected from glass fibers, carbon fibers, basalt fibers, or a combination thereof, preferably wherein the fiber reinforcement is a plurality of glass fibers.

9. The composition of any one or more of the preceding claims, wherein the fiber reinforcement further comprises a bonding coating agent or a non-bonding coating agent, wherein the bonding coating agent is selected from epoxide, poly(vinyl acetate), polyester, starch, poly(acrylic acid), melamine, poly(vinyl chloride), poly(C₁₋₃ alkylene oxide), polyurethane, polyepoxide, poly(vinyl alcohol), a C₁₋₆ organosilane, or a combination thereof, and wherein the non-bonding coating agent comprises a polyolefin coating agent; preferably wherein the non-bonding coating agent is selected from polyethylene wax, polypropylene wax, polybutylene wax, polyethylene-propylene wax, polyethylene-butylene wax, or a combination thereof; preferably wherein the bonding coating agent or the non-bonding coating agent further comprises a silane coupling agent, preferably wherein the silane coupling agent is selected from tri(C₁₋₆ alkoxy)monoamino silane, tri(C₁₋₆ alkoxy)diamino silane, tri(C₁₋₆ alkoxy)(C₁₋₆ alkyl ureido) silane, tri(C₁₋₆ alkoxy)(epoxy C₁₋₆ alkyl) silane, tri(C₁₋₆ alkoxy)(glycidoxy C₁₋₆ alkyl) silane, tri(C₁₋₆ alkoxy)(mercapto C₁₋₆ alkyl) silane, or a combination thereof.

10. The composition of any one or more of the preceding claims, further comprising a polycarbonate-polysiloxane copolymer in an amount such that the composition contains from 0.5 to 5 weight percent of siloxane, based on the total weight of the composition.

11. The composition of any one or more of the preceding claims, wherein a molded article of the composition has a UL94 flame out time for 10 bars of 70 seconds or less, or 60 seconds or less, or 50 seconds or less at a thickness of 1.5 mm; preferably wherein the molded article of the thermoplastic composition has a UL94 flame out time for 10 bars of 80 seconds or less, or 70 seconds or less, or 60 seconds or less at a thickness of 1.0 mm; more preferably wherein the molded article of the thermoplastic composition has a UL94 flame out time for 10 bars of 100 seconds or less, or 90 seconds or less, or 80 seconds or less at a thickness of 0.8 mm.

12. The composition of any one or more of the preceding claims, wherein the composition has one or more of:
a notched Izod impact strength of at least 6 kJ/m², preferably of at least 8 kJ/m², when measured at 23°C and at a thickness of 3 mm per ISO 180 (2000); or
a melt volume flow rate of 5 to 30 cm³/10 minutes, when measured at 300°C and 1.2 kg load for 5 minutes per ISO 1133 (2011); or
a tensile modulus of 2,000 to 6,000 MPa, preferably 3,000 to 5,000 MPa, when measured at 5 mm/min per ISO 527 (2012).

13. An article comprising the composition of any one or more of the preceding claims.

14. The article of claim 13, wherein the article is a molded article, a film, a sheet, a layer of a multilayer film, or a layer of a multilayer sheet.

15. The use of the thermoplastic composition of any one or more of claims 1-12 as a film, a sheet, a layer of a multilayer film, or a layer of a multilayer sheet.
